(19) Europäisches Patentamt
European Patent Office
Office européen des brevets

(11) EP 2 953 038 A1

(12) EUROPEAN PATENT APPLICATION

(43) Date of publication:
09.12.2015 Bulletin 2015/50

(51) Int Cl.:
*G06F 17/30* (2006.01)

(21) Application number: 14197219.0

(22) Date of filing: 10.12.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 27.05.2014 CN 201410228820

(71) Applicant: Baidu Online Network Technology
(Beijing) Co., Ltd
Beijing 100085 (CN)

(72) Inventors:
• Li, Tingting
100085 Beijing (CN)
• Wan, Wei
100085 Beijing (CN)
• Zhao, Shiqi
100085 Beijing (CN)

(74) Representative: Pizzoli, Antonio
Società Italiana Brevetti S.p.A.
Via Carducci 8
I-20123 Milano (IT)

(54) **Interactive searching method and apparatus**

(57) An interactive searching method and apparatus are provided. The interactive searching method includes: receiving a first query; obtaining an intention clarification guidance sentence according to the first query; receiving a feedback corresponding to the intention clarification guidance sentence and generating a second query according to the first query, the intention clarification guidance sentence and the feedback; and providing a search result according to the second query.

Fig. 1

Printed by Jouve, 75001 PARIS (FR)

**Description**

## FIELD

Embodiments of the present disclosure generally relate to a searching technology field, and more particularly, to an interactive searching method and apparatus

## BACKGROUND

With a development of the computer technology, internet applications become more and more popular and a user can obtain internet sources that he needs through a search engine. Certainly, in a related searching method, the user inputs a query firstly, and the search engine obtains a search result associated with the query and returns the search result to the client and the user obtains the source that he needs from the returned search result finally.

However, according to the above searching method, an accurate answer cannot be provided by the search engine due to an unclear or incomplete expression of the query input by the user. Even provided with same sources, since the user is not familiar with a field that the query belongs to, it is required for the user to change the query many times to perform a search, and thus a searching cost of the user is dramatically high, but even so the obtained search result still cannot satisfy a requirement of the user.

## SUMMARY

Embodiments of the present disclosure seek to solve at least one of the problems existing in the related art to at least some extent.

Accordingly, a first objective of the present disclosure is to provide an interactive searching method, which can update a query automatically according to a historical query and a feedback, thus reducing an input operation of a user and decreasing a memory burden of the user.

A second objective of the present disclosure is to provide an interactive searching apparatus.

In order to achieve above objectives, embodiments of a first aspect of the present disclosure provides an interactive searching method, including: receiving a first query; obtaining an intention clarification guidance sentence according to the first query; receiving a feedback corresponding to the intention clarification guidance sentence and generating a second query according to the first query, the intention clarification guidance sentence and the feedback; and providing a search result according to the second query.

Embodiments of a second aspect of the present disclosure provide an interactive searching apparatus, including: a first receiving module configured to receive a first query; a first obtaining module configured to obtain an intention clarification guidance sentence according to the first query; and a second receiving module configured to receive a feedback corresponding to the intention clarification guidance sentence; a generating module configured to generate a second query according to the first query, the intention clarification guidance sentence and the feedback; and a providing module configured to provide a search result according to the second query.

Embodiments of a third aspect of the present disclosure provide an apparatus, including: one or more processors; a memory; and one or more programs stored in the memory and executed by the one or more processors to execute an interactive searching method provided by above embodiments of the present disclosure.

Embodiments of a fourth aspect of the present disclosure provide a non-transitory computer-readable storage medium, including one or more programs for executing an interactive searching method provided by above embodiments of the present disclosure.

Additional aspects and advantages of embodiments of present disclosure will be given in part in the following descriptions, become apparent in part from the following descriptions, or be learned from the practice of the embodiments of the present disclosure.

## BRIEF DESCRIPTION OF THE DRAWINGS

These and other aspects and advantages of embodiments of the present disclosure will become apparent and more readily appreciated from the following descriptions made with reference to the accompanying drawings, in which:

Fig. 1 is a flow chart of an interactive searching method according to an embodiment of the present disclosure;
Fig. 2a is a schematic diagram showing an effect of inputting a feedback according to an intention clarification guidance sentence according to an embodiment of the present disclosure;
Fig. 2b is a schematic diagram showing an effect of providing a search result according to a second query according to an embodiment of the present disclosure;

Fig. 2c is a schematic diagram showing an effect of providing a candidate result according to a first query according to an embodiment of the present disclosure;

Fig. 2d is a schematic diagram showing an effect of providing a search result according to a second query according to an embodiment of the present disclosure;

Fig. 3 is a flow chart of a method for generating a second query according to a first query, an intention clarification guidance sentence and a feedback according to an embodiment of the present disclosure;

Fig. 4 is a flow chart of a method for obtaining one or more key-word sets according to a first query, an intention clarification guidance sentence and a feedback according to an embodiment of the present disclosure;

Fig. 5 is a flow chart of a method for obtaining one or more key-word sets according to a first query and a feedback according to an embodiment of the present disclosure;

Fig. 6 is a flow chart of a method for generating a second query according to one or more key-word sets according to an embodiment of the present disclosure;

Fig. 7 is a block diagram of an interactive searching apparatus according to an embodiment of the present disclosure;

Fig. 8 is a block diagram of an interactive searching apparatus according to an embodiment of the present disclosure;

Fig. 9 is a block diagram of an interactive searching apparatus according to another embodiment of the present disclosure;

Fig. 10 is a block diagram of a second obtaining sub-module in a generating module of an interactive searching apparatus according to an embodiment of the present disclosure;

Fig. 11 is a block diagram of a third obtaining sub-module in a generating module of an interactive searching apparatus according to an embodiment of the present disclosure; and

Fig. 12 is a block diagram of a generating sub-module in a generating module of an interactive searching apparatus according to an embodiment of the present disclosure.

## DETAILED DESCRIPTION

Reference will be made in detail to embodiments of the present disclosure. Embodiments of the present disclosure will be shown in drawings, in which the same or similar elements and the elements having same or similar functions are denoted by like reference numerals throughout the descriptions. The embodiments described herein according to drawings are explanatory and illustrative, not construed to limit the present disclosure.

In the description of the present disclosure, it should be noted that "a plurality of" relates to two or more than two; terms such as "first" and "second" are used herein for purposes of description and are not intended to indicate or imply relative importance or significance.

An interactive searching method and apparatus according to embodiments of the present disclosure will be described in the following with reference to drawings.

In embodiments of the present disclosure, an interactive search is a search in which a search guidance for a user can be performed by providing an interactive information. Specifically, the interactive information (such as an intention clarification guidance sentence) is provided for the user according to a query of the user and the query is updated according to a feedback corresponding to the interactive information, such that another search is performed according to the updated query and another search result is returned.

In order to solve a problem that an accurate answer cannot be provided by a search engine due to an unclear or incomplete expression of the query input by the user, embodiments of the present disclosure provide an interactive searching method, including: receiving a first query; obtaining an intention clarification guidance sentence according to the first query; receiving a feedback corresponding to the intention clarification guidance sentence and generating a second query according to the first query, the intention clarification guidance sentence and the feedback; and providing a search result according to the second query.

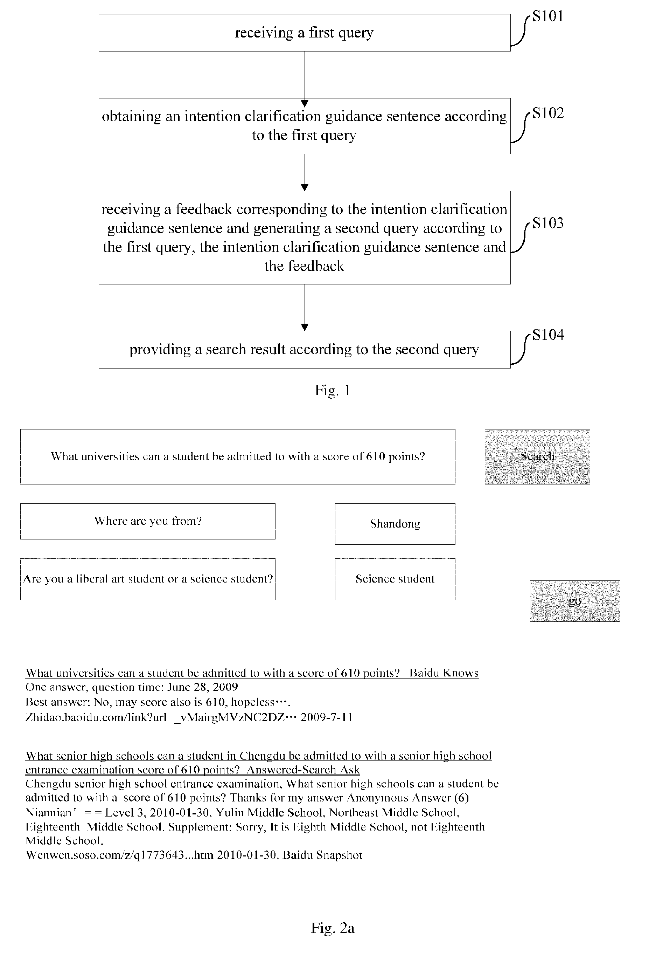

Fig. 1 is a flow chart of an interactive searching method according to an embodiment of the present disclosure. As shown in Fig. 1, the interactive searching method includes following steps.

At step S101, a first query is received.

In an embodiment of the present disclosure, the first query may be a term or a sentence. The user can input the first query in a search box or other search fields in a search page according to a requirement.

At step S102, an intention clarification guidance sentence is obtained according to the first query.

In embodiments of the present disclosure, before the intention clarification guidance sentence is obtained according to the first query, a sentence library shall be established, such that the search engine can obtain the intention clarification guidance sentence by querying the sentence library. Certainly, if the sentence library has been established, a step of establishing the sentence library can be omitted. It should be understood that the search engine may obtain one or more intention clarification guidance sentences according to the first query so as to guide the user to clarify a search intention of his own. For example, for the first query such as "What universities can a student be admitted to with a score of 610 points?", two intention clarification guidance sentences such as "Where are you from?" and "are you a liberal art student or a science student?" can be obtained.

At step S103, a feedback corresponding to the intention clarification guidance sentence is received and a second query is generated according to the first query, the intention clarification guidance sentence and the feedback.

In embodiments of the present disclosure, the feedback is an answer term or sentence corresponding to the intention clarification guidance sentence. Specifically, after the intention clarification guidance sentence is obtained, the search engine can receive the feedback corresponding to the intention clarification guidance sentence via a client, in which the feedback is input by the user. In an embodiment of the present disclosure, the search engine can display the intention clarification guidance sentence to the user via the client and provide at least one candidate result corresponding to the intention clarification guidance sentence or an input box, such that the user can select a candidate result that satisfies his search intention from the at least one candidate result or input an answer corresponding to the intention clarification guidance sentence in the input box directly.

Furthermore, the search engine obtains the second query according to the first query, the intention clarification guidance sentence and the feedback. Specifically, the search engine obtains terms indicating the search intention of the user from the first query, the intention clarification guidance sentence and the feedback via a syntax analysis or a word meaning analysis, and obtains the second query according to the terms.

In an embodiment of the present disclosure as show in Fig. 2a, for the first query that "What universities can a student be admitted to with a score of 610 points?", the search engine provides two intention clarification guidance sentences such as "Where are you from?" and "are you a liberal art student or a science student?" to the user via the client. Moreover, the input box is provided after each intention clarification guidance sentence, and in this way the user can input "Shandong" and "science" in the two input boxes respectively. When the user clicks a button "go", the search engine receives the feedback corresponding to the two intention clarification guidance sentences and generates the second query that "What universities can a science student in Shandong province be admitted to with a score of 610 points?".

At step S104, a search result is provided according to the second query.

In embodiments of the present disclosure, after the search result is obtained according to the second query, the search engine returns the search result to the client so as to provide the search result to the user via the client.

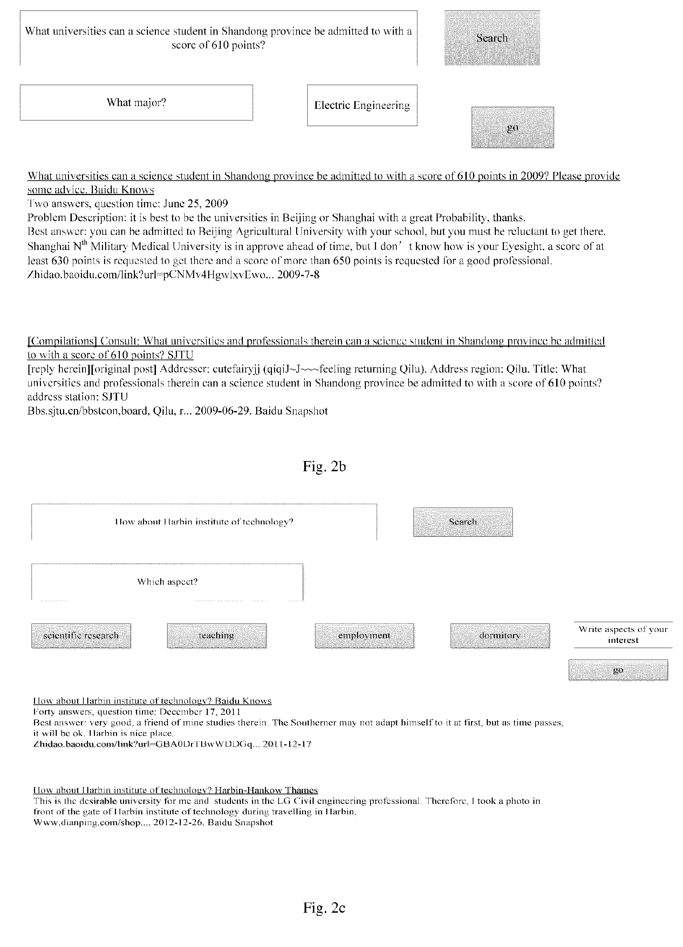

In addition, the search engine may determine whether to further guide the user according to the generated second query; if yes, a corresponding intention clarification guidance sentence may be obtained according to the second query to continue to guide the user; if not, the search result may be provided directly. For example, in an embodiment of the present disclosure as shown in Fig. 2a, the search engine provides the search result as shown in Fig. 2b according to the second query that "What universities can a science student in Shandong province be admitted to with a score of 610 points?" and further provides an intention clarification guidance sentence "What major?".

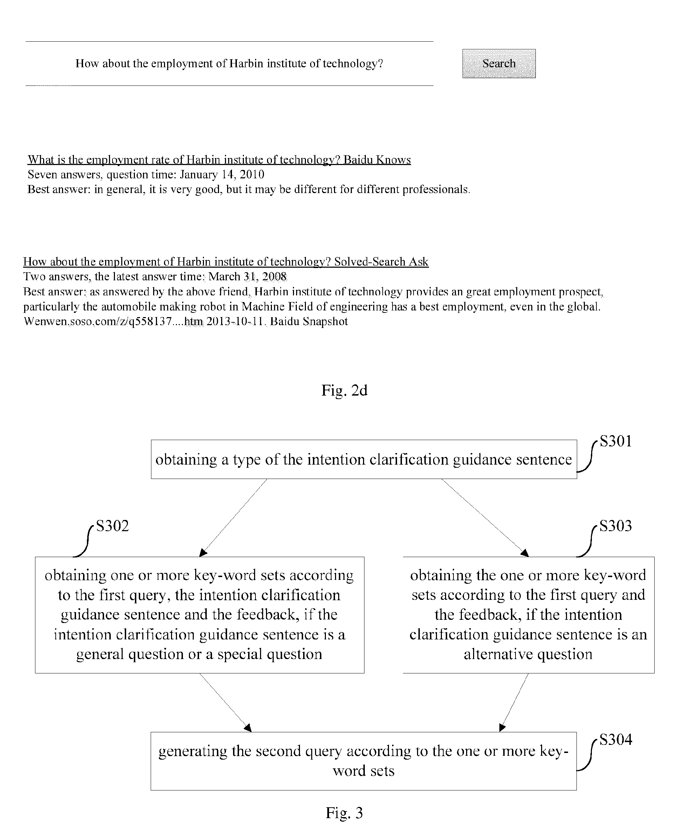

In an embodiment of the present disclosure, after the intention clarification guidance sentence is obtained according to the first query, the search engine provides the at least one candidate result corresponding to the intention clarification guidance sentence, receives a triggering operation for the at least one candidate result and treats a triggered candidate result as the feedback corresponding to the intention clarification guidance sentence, and thus the input operation of the user is reduced. Specifically, in an embodiment of the present disclosure as shown in Fig. 2c, for the first query that "How about Harbin institute of technology?", the search engine provides four candidate results such as "scientific research", "teaching", "employment" and "dormitory" for the user to select. In addition, the input box is further provided, and the user can input the feedback therein if there is not a result satisfying the requirement of himself in the candidate results. Furthermore, when the user clicks "employment", the search engine generates the second query that "How about the employment of Harbin institute of technology?" and provides the search result as shown in Fig. 2d.

In an embodiment of the present disclosure, the second query may be generated by selecting a whole or a part of the first query, the intention clarification guidance sentence and the feedback according to a type of the intention clarification guidance sentence. In embodiments of the present disclosure, the first query is represented as c_query, the intention clarification guidance sentence is represented as qb, the feedback is represented as ans and the second query is represented as n_query. The type of the intention clarification guidance sentence generally includes a general question, a special question and an alternative question. For example, the second queries generated according to the above three types of intention clarification guidance sentences are shown in Table 1.

Table 1

| Type of the intention clarification guidance sentence | c_query | qb | ans | Used information | n_query |
|---|---|---|---|---|---|
| General question | A subway schedule of line 3 | Of Beijing? | Yes | c_query, qb, ans | A subway schedule of line 3 in Beijing |

(continued)

| Type of the intention clarification guidance sentence | c_query | qb | ans | Used information | n_query |
|---|---|---|---|---|---|
| Alternative question | What are the interesting places around Beijing? | Self-driving or taking a bus? | Self-driving | c_query, ans | What are the interesting places around Beijing by self-driving? |
| Special question | How to get to Beijing Zoo? | Where do you start? | Shangdi | c_query, qb, ans | How to get to Beijing Zoo from Shangdi? |

Specifically, Fig. 3 is a flow chart of a method for generating a second query according to a first query, an intention clarification guidance sentence and a feedback includes following steps. As shown in Fig. 3, the method includes following steps.

At step S301, a type of the intention clarification guidance sentence is obtained.

Specifically, the type of the intention clarification guidance sentence may be obtained by performing a syntax analysis thereon.

At step S302, if the intention clarification guidance sentence is a general question or a special question, one or more key-word sets are obtained according to the first query, the intention clarification guidance sentence and the feedback.

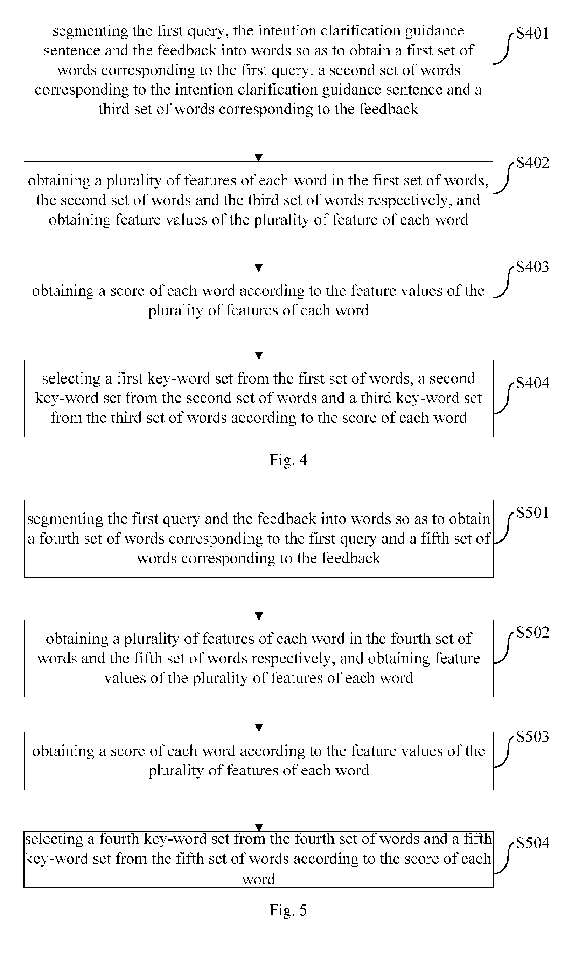

In an embodiment of the present disclosure as shown in Fig. 4, a method for obtaining the one or more key-word sets according to the first query, the intention clarification guidance sentence and the feedback includes following steps.

At step S401, the first query, the intention clarification guidance sentence and the feedback are segmented into words so as to obtain a first set of words corresponding to the first query, a second set of words corresponding to the intention clarification guidance sentence and a third set of words corresponding to the feedback.

In embodiments of the present disclosure, during segmenting the first query, the intention clarification guidance sentence and the feedback into words, simultaneously the syntax analysis, an entity identification and a stop word omitting processing are performed on the first query, the intention clarification guidance sentence and the feedback and a part-of-speech tagging is performed on each word, such that the first set of words, the second set of words and the third set of words can be obtained.

At step S402, a plurality of features of each word in the first set of words, the second set of words and the third set of words are obtained respectively, and feature values of the plurality of feature of each word are obtained.

In embodiments of the present disclosure, the plurality of features of each word may include a part of speech, a syntactic constituent, a word frequency in a corpus of a large number of sentences, a number of occurrence times, whether being an entity or not, a position in the sentence and features of a hypernym and a hyponym of the each word.

At step S403, a score of each word is obtained according to the feature values of the plurality of features of each word.

In embodiments of the present disclosure, the score of each word may be obtained according to the feature values of the plurality of features of each word by using following formulas:

$$score_w = \exp(\sum_{i-1}^{N} \lambda_i f_i(w)) \; score_w = \exp(\sum_{i}^{N} \lambda_i f_i(w)),$$

where $score_w$ is a score of $w^{th}$ word, $\lambda_i$ is a weight of a $i^{th}$ feature of the $w^{th}$ word, $f_i(w)$ is a feature value of the $i^{th}$ feature of the $w^{th}$ word, and N is a total number of the plurality of features of the $w^{th}$ word.

At step S404, a first key-word set is selected from the first set of words, a second key-word set is selected from the second set of words and a third key-word set is selected from the third set of words according to the score of each word.

In embodiments of the present disclosure, the key-word set may be selected from each set of words according to a predetermined selecting rule which is not limited herein. For example, a predetermined number of key words having a high score may be selected from each set of words, or the key words having a score higher than a predetermined threshold may be selected.

At step S303, if the intention clarification guidance sentence is an alternative question, the one or more key-word sets are obtained according to the first query and the feedback.

In an embodiment of the present disclosure as shown in Fig. 5, a method for obtaining the one or more key-word sets according to the first query and the feedback includes following steps.

At step S501, the first query and the feedback are segmented into words so as to obtain a fourth set of words corresponding to the first query and a fifth set of words corresponding to the feedback.

In embodiments of the present disclosure, during segmenting the first query and the feedback into words, simultaneously the syntax analysis, the entity identification and the stop word omitting processing are performed on the first query and the feedback and a part-of-speech tagging is performed on each word, such that the fourth set of words and the fifth set of words can be obtained.

At step S502, a plurality of features of each word in the fourth set of words and the fifth set of words are obtained respectively, and feature values of the plurality of features of each word are obtained.

In embodiments of the present disclosure, the plurality of features of each word may include the part of speech, the syntactic constituent, the word frequency in the corpus of the large number of sentences, the number of occurrence times, whether being the entity or not, the position in the sentence and features of the hypernym and the hyponym of the each word.

At step S503, a score of each word is obtained according to the feature values of the plurality of features of each word.

In embodiments of the present disclosure, the score of each word may be obtained according to the feature values of the plurality of features of each word by using following formulas:

$$score_w = \exp(\sum_{i-1}^{N} \lambda_i f_i(w)) \; score_w = \exp(\sum_{i}^{N} \lambda_i f_i(w)),$$

where $score_w$ is a score of $w^{th}$ word, $\lambda_i$ is a weight of a $i^{th}$ feature of the $w^{th}$ word, $f_i(w)$ is a feature value of the $i^{th}$ feature of the $w^{th}$ word, and N is a total number of the plurality of features of the $w^{th}$ word.

At step S504, a fourth key-word set is selected from the fourth set of words and a fifth key-word set is selected from the fifth set of words according to the score of each word.

In embodiments of the present disclosure, the key-word set may be selected from each set of words according to the predetermined selecting rule which is not limited herein. For example, the predetermined number of key words having a high score may be selected from each set of words, or the key words having a score higher than the predetermined threshold may be selected.

At step S304, the second query is generated according to the one or more key-word sets.

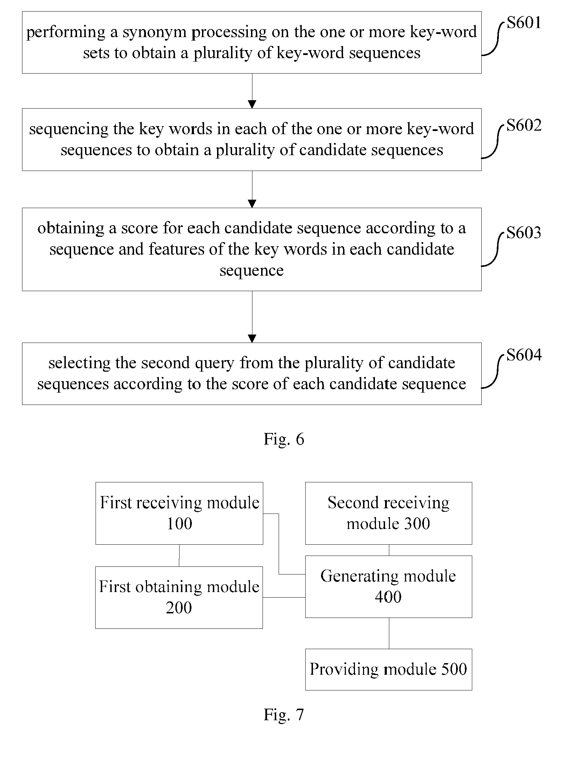

In an embodiment of the present disclosure as shown in Fig. 6, a method for generating the second query according to the one or more key-word sets includes following steps.

At step S601, a synonym processing is performed on the one or more key-word sets to obtain one or more key-word sequences.

In embodiments of the present disclosure, a main part of the second query is the first query, and the key words of the intention clarification guidance sentence and the feedback are configured as a supplement part of the second query. In order to ensure that the supplement part is significant and irredundant, in an embodiment of the present disclosure, the synonym processing may be performed on the one or more key-word sets to obtain the one or more key-word sequences. Specifically, if in both the key-word set of ans and the key-word set of qb, same or synonymous words exist, the same or synonymous word in the key-word set of qb is removed; if in the key-word set of ans or qb, same or synonymous words with the key word in the key-word set of c_query exist, the same or synonymous word in the key-word set of ans or qb is removed, and finally the key-word sequences of c_query, ans and qb are obtained.

For example, two key-word sequences shown in Table 3 can be obtained for the c_query, ans and qb shown in Table 2.

Table 2

| c_query: How to lose weight quickly? | qb: What is your height and weight? | ans: My height is 175cm, and my weight is 110kg. |
|---|---|---|

Table 3

| c_query: quickly lose weight | ans: height 175cm weight 110kg |
|---|---|

At step S602, the key words in each of the one or more key-word sequences are sequenced to obtain a plurality of candidate sequences.

In embodiments of the present disclosure, a complexity of three key-word sequences having x key words, y key words and z key words respectively is x*y*z. Therefore, if there are a large number of key words in the key-word sequence, it is extremely complex to obtain all the possible candidate sequences and a huge calculated amount is needed. Thus, in order to optimize a process of obtaining the plurality of candidate sequences, the plurality of candidate sequences may be searched and enumerated by a pruning algorithm which is not limited herein, for example the pruning algorithm may be Beam-search and A*.

At step 603, a score for each candidate sequence is obtained according to a sequence and features of the key words in each candidate sequence.

In an embodiment of the present disclosure, the score of each of the plurality of candidate sequences may be obtained by a following formula:

$$score_{sen} = \prod_i^n p(w_i \mid w_{i-1}, w_{i-2}) l(w_i)$$

where $score_{sen}$ is the score of the candidate sequence sen, $p(w_i \mid w_{i-1}, w_{i-2}) = \dfrac{c(w_i w_{i-1} w_{i-2})}{c(w_{i-1} w_{i-2})}$ is a ternary language model of the key word $w_i$ in the candidate sequence sen, $c(w_i w_{i-1} w_{i-2})$ is a number of times that the key words $w_i$, $w_{i-1}$, $w_{i-2}$ appear in the corpus at a same time, $c(w_{i-1} w_{i-2})$ is a number of times that the key words $w_{i-1}$, $w_{i-2}$ appear in the corpus at a same time, $l(w_i) = \alpha^{|d|}$ is a sequencing penalty term, $\alpha$ is a constant which is larger than zero and less than one, $d = pos_{ori\_str}(w_i) - pos_{c\_str}(w_i)$, $pos_{ori\_str}(w_i)$ is a relative position in a key-word sequence in which the key word $w_i$ is between the key word $w_i$ and other key words in the key-word sequence in which the key word $w_i$ is, $pos_{c\_str}(w_i)$ is a relative position in the candidate sequence sen between the key word $w_i$ and other key words in the key-word sequence in which the key word $w_i$ is.

For example, for the candidate sequence "height 175cm 200kg lose weight quickly", if $w_i$ is "weight", the key-word sequence in which $w_i$ is is the key-word sequence "height 175cm weight 110kg" corresponding to ans, and thus $pos_{ori\_str}(w_i)=3$. Furthermore, according to a sequence "height 175cm 200kg weight" of the four key words in the candidate sequence "height 175cm weight 110kg", it can be obtained that $pos_{c\_str}(w_i)=4$, and thus $d = pos_{ori\_str}(w_i) - pos_{c\_str}(w_i)=4-3=1$ and $l(w_i) = \alpha^{|d|}=\alpha^1$.

At step S604, the second query is selected from the plurality of candidate sequences according to the score of each of the plurality of candidate sequences.

In an embodiment of the present disclosure, the candidate sequence having a highest score may be selected from the plurality of candidate sequences as the second query.

With the interactive searching method according to embodiments of the present disclosure, the intention clarification guidance sentence provided by the search engine is obtained, and the query is updated according to the intention clarification guidance sentence and the feedback corresponding to the intention clarification guidance sentence and the search result is provided according to the updated query, such that the search intention of the user is clarified, and also the query can be updated automatically according to a historical query and the feedback and it is just required for the user to input the feedback corresponding to the intention clarification guidance sentence, and thus an input operation of the user is reduced and a memory burden of the user is also decreased. Moreover, an accuracy of the search engine to identify the search intention of the user is increased and a requirement of the user is satisfied, and in this way a user experience is improved.

In order to achieve above embodiments, an interactive searching apparatus is provided by embodiments of the present disclosure.

The interactive searching apparatus includes a first receiving module configured to receive a first query; a first obtaining module configured to obtain an intention clarification guidance sentence according to the first query; and a second receiving module configured to receive a feedback corresponding to the intention clarification guidance sentence; a generating module configured to generate a second query according to the first query, the intention clarification guidance sentence and the feedback; and a providing module configured to provide a search result according to the second query.

Fig. 7 is a block diagram of an interactive searching apparatus according to an embodiment of the present disclosure.

As shown in Fig. 7, the interactive searching apparatus includes a first receiving module 100, a first obtaining module 200, a second receiving module 300, a generating module 400 and a providing module 500.

Specifically, the first receiving module 100 is configured to receive a first query. In an embodiment of the present disclosure, the first query may be a term or a sentence. A user can input the first query in a search box or other search fields in a search page according to a requirement.

The first obtaining module 200 is configured to obtain an intention clarification guidance sentence according to the first query. In embodiments of the present disclosure, before the intention clarification guidance sentence is obtained according to the first query, a sentence library shall be established, such that the first obtaining module 200 can obtain the intention clarification guidance sentence by querying the sentence library. Certainly, if the sentence library has been established, a step of establishing the sentence library can be omitted. It should be understood that the first obtaining module 200 may obtain one or more intention clarification guidance sentences according to the first query so as to guide the user to clarify a search intention of his own. For example, for the first query such as "What universities can a student be admitted to with a score of 610 points?", two intention clarification guidance sentences such as "Where are you from?" and "are you a liberal art student or a science student?" can be obtained by the first obtaining module 200.

The second receiving module 300 is configured to receive a feedback corresponding to the intention clarification guidance sentence. In embodiments of the present disclosure, the feedback is an answer term or sentence corresponding to the intention clarification guidance sentence. Specifically, after the intention clarification guidance sentence is obtained, the second receiving module 300 can receive the feedback corresponding to the intention clarification guidance sentence via a client, in which the feedback is input by the user. In an embodiment of the present disclosure, the intention clarification guidance sentence may be displayed to the user via the client and at least one candidate result corresponding to the intention clarification guidance sentence or an input box may be provided, such that the user can select a candidate result that satisfies his search intention from the at least one candidate result or input an answer corresponding to the intention clarification guidance sentence in the input box directly.

The generating module 400 is configured to generate a second query according to the first query, the intention clarification guidance sentence and the feedback. Specifically, the generating module 400 obtains terms indicating the search intention of the user from the first query, the intention clarification guidance sentence and the feedback via a syntax analysis or a word meaning analysis, and obtains the second query according to the terms.

In an embodiment of the present disclosure, the generating module 400 generates the second query by selecting a whole or a part of the first query, the intention clarification guidance sentence and the feedback according to a type of the intention clarification guidance sentence. In embodiments of the present disclosure, the first query is represented as c_query, the intention clarification guidance sentence is represented as qb, the feedback is represented as ans and the second query is represented as n_query. The type of the intention clarification guidance sentence generally includes a general question, a special question and an alternative question. For example, the second queries generated according to the above three types of intention clarification guidance sentences are shown in Table 1.

In an embodiment of the present disclosure as show in Fig. 2a, for the first query that "What universities can a student be admitted to with a score of 610 points?", two intention clarification guidance sentences such as "Where are you from?" and "are you a liberal art student or a science student?" may be provided to the user via the client. Moreover, the input box is provided after each intention clarification guidance sentence, and in this way the user can input "Shandong" and "science" in the two input boxes respectively. When the user clicks a button "go", the second receiving module 300 receives the feedback corresponding to the two intention clarification guidance sentence and the generating module 400 generates the second query that "What universities can a science student in Shandong province be admitted to with a score of 610 points?".

The providing module 500 is configured to provide a search result according to the second query. In embodiments of the present disclosure, after the search result is obtained according to the second query, the search result may be returned to the client so as to be provided to the user via the client.

In addition, it may be determined whether to further guide the user according to the generated second query; if yes, the first obtaining module 200 obtains a corresponding intention clarification guidance sentence according to the second query to continue guiding the user; if not, the search result may be provided directly. For example, in an embodiment of the present disclosure as shown in Fig. 2a, the providing module 500 provides the search result as shown in Fig. 2b according to the second query that "What universities can a science student in Shandong province be admitted to with a score of 610 points?" and further provides an intention clarification guidance sentence "What major?".

With the interactive searching apparatus according to embodiments of the present disclosure, the intention clarification guidance sentence provided by the search engine is obtained, and the query is updated according to the intention clarification guidance sentence and the feedback corresponding to the intention clarification guidance sentence and the search result is provided according to the updated query, such that the search intention of the user is clarified, and also the query can be updated automatically according to a historical query and the feedback and it is just required for the user to input the feedback corresponding to the intention clarification guidance sentence, and thus an input operation of the user is reduced and a memory burden of the user is also decreased. Moreover, an accuracy of the search engine to identify the search intention of the user is increased and a requirement of the user is satisfied, and in this way a user experience is improved.

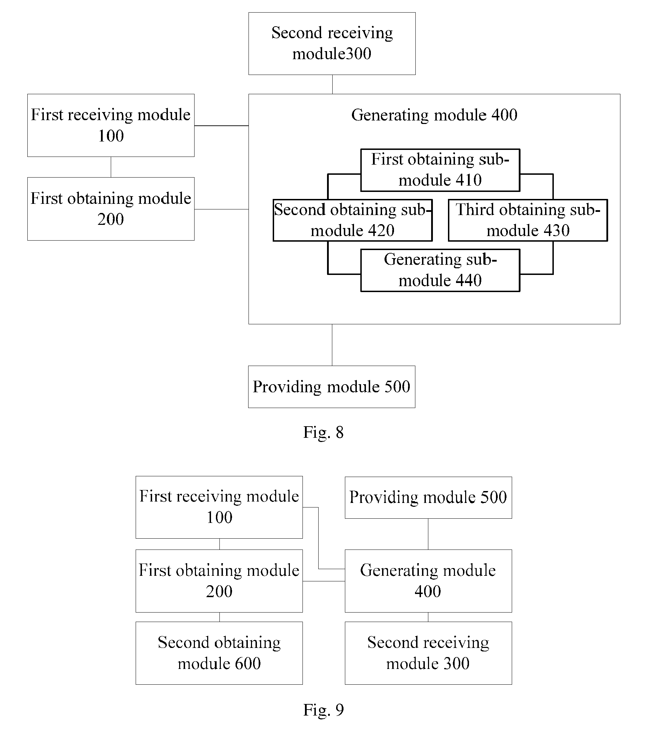

In an embodiment of the present disclosure as shown in Fig. 8, the generating module includes a first obtaining sub-module 410, a second obtaining sub-module 420, a third obtaining sub-module 430 and a generating sub-module 440.

The first obtaining sub-module 410 is configured to obtain a type of the intention clarification guidance sentence. Specifically, the first obtaining sub-module 410 obtains the type of the intention clarification guidance sentence by performing a syntax analysis thereon.

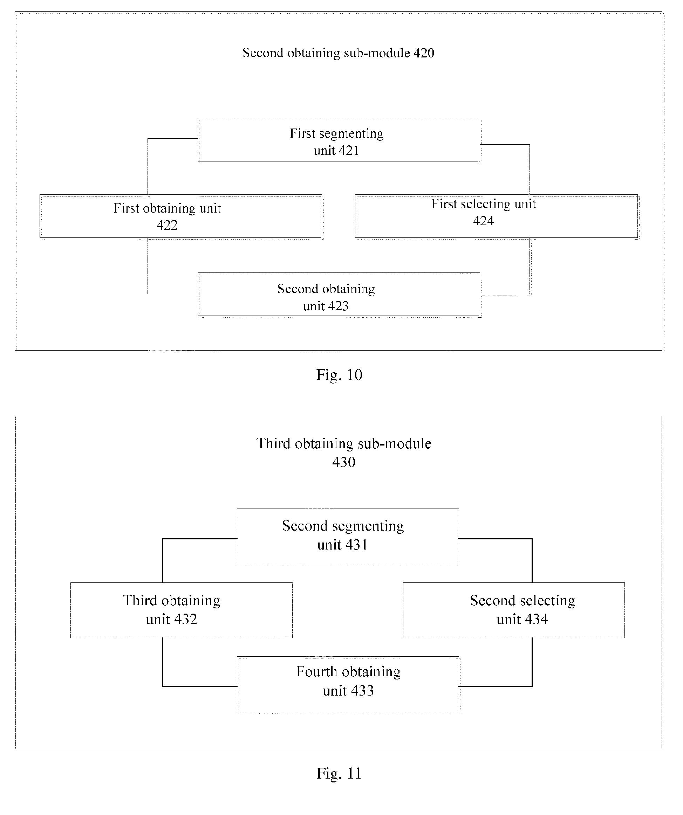

The second obtaining sub-module 420 is configured to obtain one or more key-word sets according to the first query, the intention clarification guidance sentence and the feedback, if the intention clarification guidance sentence is a general question or a special question. In an embodiment of the present disclosure as shown in Fig. 10, the second obtaining sub-module 420 further includes a first segmenting unit 421, a first obtaining unit 422, a second obtaining unit 423 and a first selecting unit 424.

The first segmenting unit 421 is configured to segment the first query, the intention clarification guidance sentence and the feedback into words so as to obtain a first set of words corresponding to the first query, a second set of words corresponding to the intention clarification guidance sentence and a third set of words corresponding to the feedback. In embodiments of the present disclosure, during segmenting the first query, the intention clarification guidance sentence and the feedback into words, simultaneously the syntax analysis, an entity identification and a stop word omitting processing are perform on the first query, the intention clarification guidance sentence and the feedback and a part-of-speech tagging is performed on each word, such that the first set of words, the second set of words and the third set of words can be obtained.

The first obtaining unit 422 is configured to obtain a plurality of features of each word in the first set of words, the second set of words and the third set of words respectively, and to obtain feature values of the plurality of features of each word. In embodiments of the present disclosure, the plurality of features of each word may include a part of speed, a syntactic constituent, a word frequency in a corpus of a large number of sentences, a number of occurrence times, whether being an entity or not, a position in the sentence and features of a hypernym and a hyponym of the each word.

The second obtaining unit 423 is configured to obtain a score of each word according to the feature values of the plurality of features of each word. In embodiments of the present disclosure, the score of each word may be obtained according to the feature values of the plurality of features of each word by using following formulas:

$$score_w = \exp(\sum\nolimits_{i-1}^{N} \lambda_i f_i(w)) \; score_w = \exp(\sum\nolimits_{i}^{N} \lambda_i f_i(w)),$$

where $score_w$ is a score of $w^{th}$ word, $\lambda_i$ is a weight of a $i^{th}$ feature of the $w^{th}$ word, $f_i(w)$ is a feature value of the $i^{th}$ feature of the $w^{th}$ word, and N is a total number of the plurality of features of the $w^{th}$ word.

The first selecting unit 424 is configured to select a first key-word set from the first set of words, a second key-word set from the second set of words and a third key-word set from the third set of words according to the score of the each word. In embodiments of the present disclosure, the key-word set may be selected from each set of words according to a predetermined selecting rule which is not limited herein. For example, a predetermined number of key words having a high score may be selected from each set of words, or the key words having a score higher than a predetermined threshold may be selected.

The third obtaining sub-module 430 is configured to obtain the one or more key-word sets according to the first query and the feedback, if the intention clarification guidance sentence is an alternative question. In an embodiment of the present disclosure as shown in Fig. 11, the third obtaining sub-module 430 includes a second segmenting unit 431, a third obtaining unit 432, a fourth obtaining unit 433 and a second selecting unit.

The second segmenting unit 431 is configured to segment the first query and the feedback into words so as to obtain a fourth set of words corresponding to the first query and a fifth set of words corresponding to the feedback. In embodiments of the present disclosure, during segmenting the first query and the feedback into words, simultaneously the syntax analysis, the entity identification and the stop word omitting processing are perform on the first query and the feedback and a part-of-speech tagging is performed on each word, such that the fourth set of words and the fifth set of words can be obtained.

The third obtaining unit 432 is configured to obtain a plurality of features of each word in the fourth set of words and the fifth set of words respectively, and to obtain feature values of the plurality of features of each word. In embodiments of the present disclosure, the plurality of features of each word may include the part of speed, the syntactic constituent, the word frequency in the corpus of the large number of sentences, the number of occurrence times, whether being the entity or not, the position in the sentence and features of the hypernym and the hyponym of the each word.

The fourth obtaining unit 433 is configured to obtain a score of each word according to the feature values of the plurality of features of each word. In embodiments of the present disclosure, the score of each word may be obtained according to the feature values of the plurality of features of each word by using following formulas:

$$score_w = \exp(\sum_{i-1}^{N} \lambda_i f_i(w)) \; score_w = \exp(\sum_{i}^{N} \lambda_i f_i(w)),$$

where $score_w$ is a score of $w^{th}$ word, $\lambda_i$ is a weight of a $i^{th}$ feature of the $w^{th}$ word, $f_i(w)$ is a feature value of the $i^{th}$ feature of the $w^{th}$ word, and N is a total number of the plurality of features of the $w^{th}$ word.

The second selecting unit 434 is configured to select a fourth key-word set from the fourth set of words and a fifth key-word set from the fifth set of words according to the score of each word. In embodiments of the present disclosure, the key-word set may be selected from each set of words according to the predetermined selecting rule which is not limited herein. For example, the predetermined number of key words having a high score may be selected from each set of words, or the key words having a score higher than the predetermined threshold may be selected.

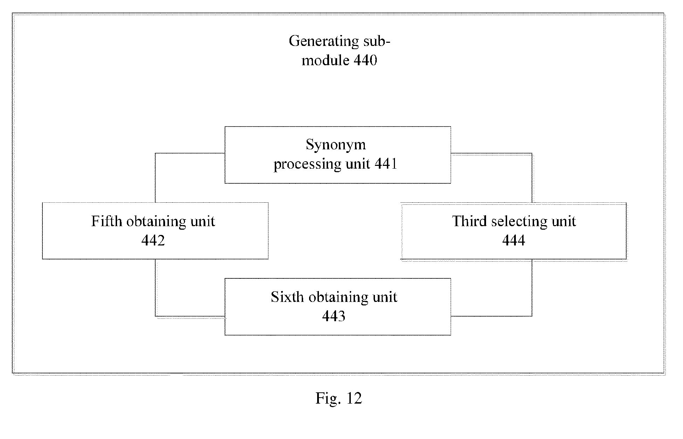

The generating sub-module 440 is configured to generate the second query according to the one or more key-word sets. In an embodiment of the present disclosure as shown in Fig. 12, the generating sub-module 440 includes a synonym processing 441, a fifth obtaining unit 442, a sixth obtaining unit 443 and a third selecting unit 444.

The synonym processing unit 441 is configured to perform a synonym processing on the one or more key-word sets to obtain one or more key-word sequences. In embodiments of the present disclosure, a main part of the second query is the first query and the key words of the intention clarification guidance sentence and the feedback are configured as a supplement part of the second query. In order to ensure that the supplement part is significant and irredundant, in an embodiment of the present disclosure, the synonym processing may be performed on the one or more key-word sets to obtain the one or more key-word sequences. Specifically, if in both the key-word set of ans and the key-word set of qb, same or synonymous words exist, the same or synonymous word in the key-word set of qb is removed; if in the key-word set of ans or qb, same or synonymous words with the key word in the key-word set of c_query exist, the same or synonymous word in the key-word set of ans or qb is removed, and finally the key-word sequences of c_query, ans and qb are obtained.

For example, two key-word sequences as shown in Table 3 can be obtained for the c_query, ans and qb shown in Table 2.

The fifth obtaining unit 442 is configured to sequence the key words in each of the one or more key-word sequences to obtain a plurality of candidate sequences. In embodiments of the present disclosure, a complexity of three key-word sequences having x key words, y key words and z key words respectively is x*y*z. Therefore, if there are a large number of key words in the key-word sequence, it is extremely complex to obtain all the possible candidate sequences and a huge calculated amount is needed. Thus, in order to optimize a process of obtaining the plurality of candidate sequences, the plurality of candidate sequences may be searched and enumerated by a pruning algorithm which is not limited herein, for example the pruning algorithm may be Beam-search and A*.

The sixth obtaining unit 443 is configured to obtain a score for each candidate sequence according to a sequence and features of the key words in each candidate sequence. In an embodiment of the present disclosure, the score of each of the plurality of candidate sequences may be obtained by a following formula:

$$score_{sen} = \prod_{i}^{n} p(w_i \mid w_{i-1}, w_{i-2}) l(w_i)$$

where $score_{sen}$ is the score of the candidate sequence sen, $p(w_i \mid w_{i-1}, w_{i-2}) = \dfrac{c(w_i w_{i-1} w_{i-2})}{c(w_{i-1} w_{i-2})}$ is a ternary language model of the key word $w_i$ in the candidate sequence sen, $c(w_i w_{i-1} w_{i-2})$ is a number of times that the key words $w_i$, $w_{i-1}$, $w_{i-2}$ appear in the corpus at a same time, $c(w_{i-1} w_{i-2})$ is a number of times that the key words $w_{i-1}$, $w_{i-2}$ appear in the corpus at a same time, $l(w_i) = \alpha^{|d|}$ is a sequencing penalty term, $\alpha$ is a constant which is larger than zero and less than one, $d = pos_{ori\_str}(w_i) - pos_{c\_str}(w_i)$, $pos_{ori\_str}(w_i)$ is a relative position in a key-word sequence in which the key word $w_i$ is between the key word $w_i$ and other key words in the key-word sequence in which the key word $w_i$ is, $pos_{c\_str}(w_i)$ is a relative position in the candidate sequence sen between the key word $w_i$ and other key words in the key-word sequence in which the key word $w_i$ is.

For example, for the candidate sequence "height 175cm 200kg lose weight quickly", if $w_i$ is "weight", the key-word sequence in which $w_i$ is is the key-word sequence "height 175cm weight 110kg" corresponding to ans, and thus $pos_{ori\_str}(w_i) = 3$. Furthermore, according to a sequence "height 175cm 200kg weight" of the four key words in the candidate sequence "height 175cm weight 110kg", it can be obtained that $pos_{c\_str}(w_i) = 4$, and thus $d = pos_{ori\_str}(w_i) - pos_{c\_str}(w_i) = 4 - 3 = 1$ and $l(w_i) = \alpha^{|d|} = \alpha^1$.

The third selecting unit 444 is configured to select the second query from the plurality of candidate sequences according to the score of the each of the plurality of candidate sequences. In an embodiment of the present disclosure, the candidate sequence having a highest score may be selected from the plurality of candidate sequences as the second query.

Fig. 9 is a block diagram of an interactive searching apparatus according to an embodiment of the present disclosure.

As shown in Fig. 9, the interactive searching apparatus according to embodiments of the present disclosure includes: a first receiving module 100, a first obtaining module 200, a second receiving module 300, a generating module 400, a providing module 500 and a second obtaining module 600.

The second obtaining module 600 is configured to obtain at least one candidate result corresponding to the intention clarification guidance sentence,

For example, in an embodiment of the present disclosure as shown in Fig. 2c, for the first query that "How about Harbin institute of technology?", the second obtaining module 600 provides four candidate results such as "scientific research", "teaching", "employment" and "dormitory" for the user to select. In addition, the input box is further provided, and the user can input the feedback therein if there is not a result satisfying the requirement of himself in the candidate results. Furthermore, when the user clicks "employment", the generating module may generates the second query that "How about the employment of Harbin institute of technology"? and the providing module 500 provides the search result as shown in Fig. 2d.

With the interactive searching apparatus according to embodiments of the present disclosure, the at least one candidate result corresponding to the intention clarification guidance sentence is provided to the user and the corresponding feedback is obtained according to the triggering operation of the user for the at least one candidate result, such that the second query is obtained and the search result is provided according to the second query. Thus, it is not needed for the user to input the feedback and the input operation of the user is further reduced.

An apparatus is provided by embodiments of the present disclosure. The apparatus includes: one or more processors; a memory; and one or more programs stored in the memory and executed by the one or more processors to execute an interactive searching method provided by above embodiments of the present disclosure.

A non-transitory computer-readable storage medium is provided by embodiments of the present disclosure. The non-transitory computer-readable storage medium includes one or more programs for executing an interactive searching method provided by above embodiments of the present disclosure.

Any procedure or method described in the flow charts or described in any other way herein may be understood to include one or more modules, portions or parts for storing executable codes that realize particular logic functions or procedures. Moreover, advantageous embodiments of the present disclosure includes other implementations in which the order of execution is different from that which is depicted or discussed, including executing functions in a substantially simultaneous manner or in an opposite order according to the related functions. This should be understood by those skilled in the art which embodiments of the present disclosure belong to.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system including processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium include but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in a electric manner, and then the programs may be stored in the computer memories.

It is understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs include one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks or CD, etc.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the phrases throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

**Claims**

1. An interactive searching method, comprising:

   receiving a first query;
   obtaining an intention clarification guidance sentence according to the first query;
   receiving a feedback corresponding to the intention clarification guidance sentence and generating a second query according to the first query, the intention clarification guidance sentence and the feedback; and
   providing a search result according to the second query.

2. The method according to claim 1, further comprising:

   obtaining at least one candidate result of the intention clarification guidance sentence; and
   receiving a triggering operation for the at least one candidate result and treating a triggered candidate result as the feedback corresponding to the intention clarification guidance sentence.

3. The method according to claim 1 or 2, wherein generating a second query according to the first query, the intention clarification guidance sentence and the feedback comprises:

   obtaining a type of the intention clarification guidance sentence;
   obtaining one or more key-word sets according to the first query, the intention clarification guidance sentence and the feedback, if the intention clarification guidance sentence is a general question or a special question;
   obtaining one or more key-word sets according to the first query and the feedback, if the intention clarification guidance sentence is an alternative question; and
   generating the second query according to the one or more key-word sets.

4. The method according to claim 3, wherein obtaining one or more key-word sets according to the first query, the intention clarification guidance sentence and the feedback comprises:

   segmenting the first query, the intention clarification guidance sentence and the feedback into words so as to obtain a first set of words corresponding to the first query, a second set of words corresponding to the intention clarification guidance sentence and a third set of words corresponding to the feedback;
   obtaining a plurality of features of each word in the first set of words, the second set of words and the third set of words respectively, and obtaining feature values of the plurality of feature of each word;
   obtaining a score of each word according to the feature values of the plurality of features of each word; and
   selecting a first key-word set from the first set of words, a second key-word set from the second set of words and a third key-word set from the third set of words according to the score of each word.

5. The method according to claim 3, wherein obtaining the one or more key-word sets according to the first query and the feedback comprises:

segmenting the first query and the feedback into words so as to obtain a fourth set of words corresponding to the first query and a fifth set of words corresponding to the feedback;
obtaining a plurality of features of each word in the fourth set of words and the fifth set of words respectively, and obtaining feature values of the plurality of features of each word;
obtaining a score of each word according to the feature values of the plurality of features of each word; and
selecting a fourth key-word set from the fourth set of words and a fifth key-word set from the fifth set of words according to the score of each word.

6. The method according to any one of claims 3-5, wherein generating the second query according to the plurality of key words comprises:

performing a synonym processing on the one or more key-word sets to obtain one or more key-word sequences;
sequencing the key words in each of the one or more key-word sequences to obtain a plurality of candidate sequences;
obtaining a score for each candidate sequence according to a sequence and features of the key words in each candidate sequence; and
selecting the second query from the plurality of candidate sequences according to the score of each candidate sequence.

7. An interactive searching apparatus, comprising:

a first receiving module configured to receive a first query;
a first obtaining module configured to obtain an intention clarification guidance sentence according to the first query; and
a second receiving module configured to receive a feedback corresponding to the intention clarification guidance sentence;
a generating module configured to generate a second query according to the first query, the intention clarification guidance sentence and the feedback; and
a providing module configured to provide a search result according to the second query.

8. The apparatus according to claim 7, further comprising:

a second obtaining module configured to obtain at least one candidate result of the intention clarification guidance sentence,
wherein the second receiving module is further configured to receive a triggering operation for the at least one candidate results and to treat a triggered candidate result as the feedback corresponding to the intention clarification guidance sentence.

9. The apparatus according to claim 7 or 8, wherein the generating module comprises:

a first obtaining sub-module configured to obtain a type of the intention clarification guidance sentence;
a second obtaining sub-module configured to obtain one or more key-word sets according to the first query, the intention clarification guidance sentence and the feedback, if the intention clarification guidance sentence is a general question or a special question;
a third obtaining sub-module configured to obtain the one or more key-word sets according to the first query and the feedback, if the intention clarification guidance sentence is an alternative question; and
a generating sub-module configured to generate the second query according to the one or more key-word sets.

10. The apparatus according to claim 9, wherein the second obtaining sub-module comprises:

a first segmenting unit configured to segment the first query, the intention clarification guidance sentence and the feedback into words so as to obtain a first set of words corresponding to the first query, a second set of words corresponding to the intention clarification guidance sentence and a third set of words corresponding to the feedback;
a first obtaining unit configured to obtain a plurality of features of each word in the first set of words, the second set of words and the third set of words respectively, and to obtain feature values of the plurality of features of each word;

a second obtaining unit configured to obtain a score of each word according to the feature values of the plurality of features of each word; and

a first selecting unit configured to select a first key-word set from the first set of words, a second key-word set from the second set of words and a third key-word set from the third set of words according to the score of the each word.

11. The apparatus according to claim 9, wherein the third obtaining sub-module comprises:

a second segmenting unit configured to segment the first query and the feedback into words so as to obtain a fourth set of words corresponding to the first query and a fifth set of words corresponding to the feedback;

a third obtaining unit configured to obtain a plurality of features of each word in the fourth set of words and the fifth set of words respectively, and to obtain feature values of the plurality of features of each word;

a fourth obtaining unit configured to obtain a score of each word according to the feature values of the plurality of features of each word; and

a second selecting unit configured to select a fourth key-word set from the fourth set of words and a fifth key-word set from the fifth set of words according to the score of each word.

12. The apparatus according to any one of claims 9-11, wherein the generating sub-module comprises:

a synonym processing unit configured to perform a synonym processing on the one or more key-word sets to obtain one or more key-word sequences;

a fifth obtaining unit configured to sequence the key words in each of the one or more key-word sequences to obtain a plurality of candidate sequences;

a sixth obtaining unit configured to obtain a score for each candidate sequence according to a sequence and features of the key words in each candidate sequence; and

a third selecting unit configured to select the second query from the plurality of candidate sequences according to the score of each candidate sequence.

13. An apparatus, comprising:

one or more processors;
a memory; and
one or more programs stored in the memory and executed by the one or more processors to execute an interactive searching method according to anyone of claims 1-6.

14. A non-transitory computer-readable storage medium, comprising one or more programs for executing an interactive searching method according to any one of claims 1-6.

| receiving a first query | S101 |

↓

| obtaining an intention clarification guidance sentence according to the first query | S102 |

↓

| receiving a feedback corresponding to the intention clarification guidance sentence and generating a second query according to the first query, the intention clarification guidance sentence and the feedback | S103 |

↓

| providing a search result according to the second query | S104 |

Fig. 1

| What universities can a student be admitted to with a score of 610 points? | | Search |

| Where are you from? | Shandong |

| Are you a liberal art student or a science student? | Science student |

go

What universities can a student be admitted to with a score of 610 points?   Baidu Knows
One answer, question time: June 28, 2009
Best answer: No, may score also is 610, hopeless···.
Zhidao.baoidu.com/link?url=_vMairgMVzNC2DZ··· 2009-7-11

What senior high schools can a student in Chengdu be admitted to with a senior high school entrance examination score of 610 points?  Answered-Search Ask
Chengdu senior high school entrance examination, What senior high schools can a student be admitted to with a  score of 610 points? Thanks for my answer Anonymous Answer (6)
Niannian' = = Level 3, 2010-01-30, Yulin Middle School, Northeast Middle School, Eighteenth  Middle School. Supplement: Sorry, It is Eighth Middle School, not Eighteenth Middle School.
Wenwen.soso.com/z/q1773643...htm 2010-01-30. Baidu Snapshot

Fig. 2a

What universities can a science student in Shandong province be admitted to with a score of 610 points?

Search

What major?

Electric Engineering

go

What universities can a science student in Shandong province be admitted to with a score of 610 points in 2009? Please provide some advice. Baidu Knows
Two answers, question time: June 25, 2009
Problem Description: it is best to be the universities in Beijing or Shanghai with a great Probability, thanks.
Best answer: you can be admitted to Beijing Agricultural University with your school, but you must be reluctant to get there. Shanghai N[th] Military Medical University is in approve ahead of time, but I don't know how is your Eyesight, a score of at least 630 points is requested to get there and a score of more than 650 points is requested for a good professional.
/hidao.baoidu.com/link?url=pCNMv4HgwlxvEwo... 2009-7-8

[Compilations] Consult: What universities and professionals therein can a science student in Shandong province be admitted to with a score of 610 points? SJTU
[reply herein][original post] Addresser: cutefairyjj (qiqiJ~J~~~feeling returning Qilu). Address region: Qilu. Title: What universities and professionals therein can a science student in Shandong province be admitted to with a score of 610 points? address station: SJTU
Bbs.sjtu.cn/bbstcon,board, Qilu, r... 2009-06-29. Baidu Snapshot

Fig. 2b

How about Harbin institute of technology?

Search

Which aspect?

scientific research

teaching

employment

dormitory

Write aspects of your interest

go

How about Harbin institute of technology? Baidu Knows
Forty answers, question time: December 17, 2011
Best answer: very good, a friend of mine studies therein. The Southerner may not adapt himself to it at first, but as time passes, it will be ok. Harbin is nice place.
Zhidao.baoidu.com/link?url=GBA0DrTBwWDDGq... 2011-12-17

How about Harbin institute of technology? Harbin-Hankow Thames
This is the desirable university for me and students in the LG Civil engineering professional. Therefore, I took a photo in front of the gate of Harbin institute of technology during travelling in Harbin.
Www.dianping.com/shop.... 2012-12-26. Baidu Snapshot

Fig. 2c

How about the employment of Harbin institute of technology?     | Search |

What is the employment rate of Harbin institute of technology? Baidu Knows
Seven answers, question time: January 14, 2010
Best answer: in general, it is very good, but it may be different for different professionals.

How about the employment of Harbin institute of technology? Solved-Search Ask
Two answers, the latest answer time: March 31, 2008
Best answer: as answered by the above friend, Harbin institute of technology provides an great employment prospect, particularly the automobile making robot in Machine Field of engineering has a best employment, even in the global.
Wenwen.soso.com/z/q558137....htm 2013-10-11. Baidu Snapshot

Fig. 2d

obtaining a type of the intention clarification guidance sentence ⟋S301

⟋S302
obtaining one or more key-word sets according to the first query, the intention clarification guidance sentence and the feedback, if the intention clarification guidance sentence is a general question or a special question

⟋S303
obtaining the one or more key-word sets according to the first query and the feedback, if the intention clarification guidance sentence is an alternative question

⟋S304
generating the second query according to the one or more key-word sets

Fig. 3

segmenting the first query, the intention clarification guidance sentence and the feedback into words so as to obtain a first set of words corresponding to the first query, a second set of words corresponding to the intention clarification guidance sentence and a third set of words corresponding to the feedback — S401

obtaining a plurality of features of each word in the first set of words, the second set of words and the third set of words respectively, and obtaining feature values of the plurality of feature of each word — S402

obtaining a score of each word according to the feature values of the plurality of features of each word — S403

selecting a first key-word set from the first set of words, a second key-word set from the second set of words and a third key-word set from the third set of words according to the score of each word — S404

Fig. 4

segmenting the first query and the feedback into words so as to obtain a fourth set of words corresponding to the first query and a fifth set of words corresponding to the feedback — S501

obtaining a plurality of features of each word in the fourth set of words and the fifth set of words respectively, and obtaining feature values of the plurality of features of each word — S502

obtaining a score of each word according to the feature values of the plurality of features of each word — S503

selecting a fourth key-word set from the fourth set of words and a fifth key-word set from the fifth set of words according to the score of each word — S504

Fig. 5

performing a synonym processing on the one or more key-word sets to obtain a plurality of key-word sequences ⌐S601

↓

sequencing the key words in each of the one or more key-word sequences to obtain a plurality of candidate sequences ⌐S602

↓

obtaining a score for each candidate sequence according to a sequence and features of the key words in each candidate sequence ⌐S603

↓

selecting the second query from the plurality of candidate sequences according to the score of each candidate sequence ⌐S604

Fig. 6

| First receiving module 100 | Second receiving module 300 |

| First obtaining module 200 | Generating module 400 |

| | Providing module 500 |

Fig. 7

Second receiving
module300

First receiving module
100

Generating module 400

First obtaining sub-
module 410

First obtaining module
200

Second obtaining sub-
module 420

Third obtaining sub-
module 430

Generating sub-
module 440

Providing module 500

Fig. 8

First receiving module
100

Providing module 500

First obtaining module
200

Generating module
400

Second obtaining
module 600

Second receiving
module 300

Fig. 9

Second obtaining sub-module 420

First segmenting
unit 421

First obtaining unit
422

First selecting unit
424

Second obtaining
unit 423

Fig. 10

Third obtaining sub-module
430

Second segmenting
unit 431

Third obtaining
unit 432

Second selecting
unit 434

Fourth obtaining
unit 433

Fig. 11

Generating sub-
module 440

Synonym
processing unit 441

Fifth obtaining unit
442

Third selecting unit
444

Sixth obtaining unit
443

Fig. 12

## EUROPEAN SEARCH REPORT

Application Number

EP 14 19 7219

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/022099 A1 (YOSHIMURA HIROKI [JP] ET AL) 25 January 2007 (2007-01-25) * paragraphs [0053], [0069] - [0070], [0120], [0190]; figures 1-3 * ----- | 1-14 | INV. G06F17/30 |
| A | US 2012/047159 A1 (PICKENS JEREMY [US] ET AL) 23 February 2012 (2012-02-23) * paragraphs [0034] - [0040]; figure 3 * ----- | 1-14 | |
| A | US 2003/149704 A1 (YAYOI TAKAAKI [JP] ET AL) 7 August 2003 (2003-08-07) * paragraphs [0060] - [0071] * ----- | 1-14 | |

TECHNICAL FIELDS SEARCHED (IPC)

G06F

The present search report has been drawn up for all claims

| Place of search | Date of completion of the search | Examiner |
|---|---|---|
| Berlin | 30 October 2015 | Moon, Timothy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 14 19 7219

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2015

| Patent document cited in search report | | Publication date | Patent family member(s) | | Publication date |
|---|---|---|---|---|---|
| US 2007022099 | A1 | 25-01-2007 | JP | 4650072 B2 | 16-03-2011 |
| | | | JP | 2006293731 A | 26-10-2006 |
| | | | US | 2007022099 A1 | 25-01-2007 |
| US 2012047159 | A1 | 23-02-2012 | JP | 5673152 B2 | 18-02-2015 |
| | | | JP | 2012043402 A | 01-03-2012 |
| | | | US | 2012047159 A1 | 23-02-2012 |
| US 2003149704 | A1 | 07-08-2003 | JP | 4003468 B2 | 07-11-2007 |
| | | | JP | 2003228581 A | 15-08-2003 |
| | | | US | 2003149704 A1 | 07-08-2003 |

EPO FORM P0459

For more details about this annex : see Official Journal of the European Patent Office, No. 12/82